# EUROPÄISCHE PATENTANMELDUNG

(11) **EP 3 742 032 A1**
(43) Veröffentlichungstag der Anmeldung: **25.11.2020**
(21) Anmeldenummer: 20169547.5
(22) Anmeldetag: 15.04.2020
(51) Int. Cl.: F16L 7/00

(54) **MODULSYSTEM UND VERFAHREN ZUM ANORDNEN EINER ROHREINHEIT SOWIE ROHREINHEIT**

(30) Priorität: 23.05.2019 DE 102019113786; 31.05.2019 DE 102019114640
(71) Anmelder: AS Technologie GmbH, 8595 Altnau (CH)
(72) Erfinder: BÄCHLE, Dieter, 8595 Altnau (CH)
(74) Vertreter: Patentanwälte Behrmann Wagner PartG mbB

(57) **Zusammenfassung**

Die Erfindung betrifft ein Modulsystem (10) und ein Verfahren zum Anordnen einer Rohreinheit sowie eine Rohreinheit, insbesondere eine aus zumindest zwei miteinander koaxial verbundenen Rohrelementen bestehenden Rohreinheit, wobei das Modulsystem ein an der Rohreinheit anordbares manschettenartiges Element (11) und zumindest ein an dem manschettenartigen Element angeordnetes, bezogen auf eine Längsachse des manschettenartigen Elements von dem manschettenartigen Element radial abragendes Organ (12, 13) umfasst, wobei das manschettenartige Element umfangseitig zwei in einer Verriegelungsstellung des manschettenartigen Elements in Wirkverbindung miteinander verbundene Endbereiche (14, 15) aufweist, wobei das manschettenartige Element in der Verriegelungsstellung der Endbereiche einen Kraft- oder Formschluss mit der Rohreinheit ausbildet, wobei die beiden Endbereiche zusammen eine werkzeuglos und manuell betätigbare Spanneinrichtung (16) zum Herstellen der Verriegelungsstellung aufweisen, wobei das radial abragende Organ lösbar mit dem manschettenartigen Element verbindbar ist, wobei das manschettenartige Element auf einer bei Anordnung an der Rohreinheit von der Rohreinheit abgewandten Seite (25) des manschettenartigen Elements eine in einer Richtung (24) eines Umfangs des manschettenartigen Elements verlaufende und sich vorzugsweise nahezu über den gesamten Umfang erstreckende Linearführung (19) aufweist, längs derer das radial abragende Organ bewegbar ist.

## Beschreibung

Die Erfindung betrifft ein Modulsystem und ein Verfahren zum Anordnen einer Rohreinheit sowie eine Rohreinheit, insbesondere eine aus zumindest zwei miteinander koaxial verbundenen Rohrelementen bestehende Rohreinheit, wobei das Modulsystem ein an der Rohreinheit anordbares manschettenartiges Element und zumindest ein an dem manschettenartigen Element angeordnetes, bezogen auf eine Längsachse des manschettenartigen Elements von dem manschettenartigen Element radial abragendes Organ umfasst, wobei das manschettenartige Element umfangseitig zwei in einer Verriegelungsstellung des manschettenartigen Elements in Wirkverbindung miteinander verbundene Endbereiche aufweist, wobei das manschettenartige Element in der Verriegelungsstellung der Endbereiche einen Kraft- oder Formschluss mit der Rohreinheit ausbildet, wobei die beiden Endbereiche zusammen eine werkzeuglos und manuell betätigbare Spanneinrichtung zum Herstellen der Verriegelungsstellung aufweisen.

Ein derartiges Modulsystem ist beispielsweise aus der DE 20 2012 102 981 U1 bekannt und dient insbesondere in Wohnbauten dazu, Rohrelemente bzw. Rohre, die zur Ausleitung von Abgasen von Heizungsanlagen verwendet werden, innerhalb eines Schachtes zu führen bzw. fixieren. Dabei soll eine in der Praxis aus mehreren Rohrelementen zusammengesetzte Rohreinheit mit einem Abstand zu einer Innenwand eines Schachtes angeordnet sein. Dies erfolgt zum einen, um eine optimale Kühlung der Rohreinheit zu erzielen, damit diese über einen gesamten Umfang der Rohreinheit in Kontakt mit einer Umgebungsluft stehen kann, und zum anderen, damit zwischen der Rohreinheit und dem Schacht bzw. der Innenwand ein ringförmiger Raum ausgebildet wird, über den beispielsweise Heizungsanlagen mit Frischluft versorgt werden können.

Aus der vorstehend genannten Schrift sind bereits verschiedene Ausführungsformen eines derartigen Modulsystems, insbesondere dessen radial abragenden Organs, bekannt. So kann das radial abragende Organ als ein Haltearm mit einer an dem Haltearm angeordneten Klemmscheibe ausgebildet sein, wobei die Klemmscheibe bei einer Anordnung einer Rohreinheit innerhalb eines Schachtes mittels des Modulsystems an einer Innenwand des Schachtes zur Anlage gebracht wird, sodass die Rohreinheit innerhalb des Schachtes von der Innenwand beabstandet geführt bzw. fixiert werden kann. In einer alternativen Ausführungsform kann das radial abragende Organ als ein Klemmring ausgebildet sein, welcher unmittelbar mit einem manschettenartigen Element eines Modulsystems verbunden ist, wobei eine Längsachse des Klemmrings vorzugsweise senkrecht zu einer Längsachse des manschettenartigen Elements verläuft.

Bei dem aus dem Stand der Technik bekannten Modulsystem besteht insbesondere die Problematik, dass eine Herstellung des Modulsystems aufgrund einer einstückigen Ausbildung des manschettenartigen Elements zusammen mit dem radial abragenden Organ mit einem hohen Fertigungsaufwand verbunden ist, sodass bei der Herstellung des Modulsystems hohe Kosten entstehen. Zudem ist das aus dem Stand der Technik bekannte Modulsystem bedingt dadurch, dass das radial abragende Organ relativ zu dem manschettenartigen Element fest bzw. unbeweglich an dem manschettenartigen Element angeordnet ist nicht flexibel für eine Vielzahl von Schächten unterschiedlichster Geometrien bzw. Querschnitte, bezogen auf eine Querachse der Schächte betrachtet, einsetzbar.

Der vorliegenden Erfindung liegt daher die Aufgabe zugrunde, ein Modulsystem und ein Verfahren zum Anordnen einer Rohreinheit sowie eine Rohreinheit vorzuschlagen, das bzw. die kostengünstig herstellbar und flexibel einsetzbar ist bzw. das eine einfache und stabile Anordnung einer Rohreinheit innerhalb eines Schachtes erlaubt.

Diese Aufgabe wird durch ein Modulsystem mit den Merkmalen des Anspruchs 1, eine Rohreinheit mit den Merkmalen des Anspruchs 14 und ein Verfahren mit den Merkmalen des Anspruchs 15 gelöst.

Das erfindungsgemäße Modulsystem zum Anordnen einer Rohreinheit, insbesondere einer aus zumindest zwei miteinander koaxial verbundenen Rohrelementen bestehenden Rohreinheit, umfasst ein an der Rohreinheit anordbares manschettenartiges Element und zumindest ein an dem manschettenartigen Element angeordnetes, bezogen auf eine Längsachse des manschettenartigen Elements von dem manschettenartigen Element radial abragendes Organ, wobei das manschettenartige Element umfangseitig zwei in einer Verriegelungsstellung des manschettenartigen Elements in Wirkverbindung miteinander verbundene Endbereiche aufweist, wobei das manschettenartige Element in der Verriegelungsstellung der Endbereiche einen Kraft- oder Formschluss mit der Rohreinheit ausbildet, wobei die beiden Endbereiche zusammen eine werkzeuglos und manuell betätigbare Spanneinrichtung zum Herstellen der Verriegelungsstellung aufweisen, wobei das radial abragende Organ lösbar mit dem manschettenartigen Element verbindbar ist, wobei das manschettenartige Element auf einer bei Anordnung an der Rohreinheit von der Rohreinheit abgewandten Seite des manschettenartigen Elements eine in einer Richtung eines Umfangs des manschettenartigen Elements verlaufende und sich vorzugsweise nahezu über den gesamten Umfang erstreckende Linearführung aufweist, längs derer das radial abragende Organ bewegbar ist.

Demzufolge umfasst das erfindungsgemäße Modulsystem zunächst ein an der Rohreinheit anordbares manschettenartiges Element, unter welchem hier ein vorzugsweise kreisringförmig ausgebildetes Element zu verstehen ist, welches die Rohreinheit bei Anordnung an der Rohreinheit umfangseitig umfasst. Außerdem umfasst das Modulsystem zumindest ein an dem manschettenartigen Element angeordnetes, bezogen auf eine Längsachse bzw. Rotationsachse des manschettenartigen Elements von dem manschettenartigen Element radial nach außen abragendes Organ, welches an einer Innenwand eines Schachtes dergestalt anlegbar ist, dass die Rohreinheit innerhalb des Schachtes von der Innenwand beabstandet angeordnet bzw. geführt und fixiert werden kann. Das manschettenartige Element seinerseits weist umfangseitig zwei in einer Verriegelungsstellung des manschettenartigen Elements in Wirkverbindung miteinander verbundene Endbereiche auf, wobei das manschettenartige Element in der Verriegelungsstellung der Endbereiche einen Kraft- oder Formschluss mit der Rohreinheit ausbildet, sodass das Modulsystem bzw. das manschettenartige Element in einer axialen Richtung bzw. in der Richtung der Längsachse des manschettenartigen Elements an der Rohreinheit gesichert werden kann. Zur Herstellung bzw. Ausbildung der Verriegelungsstellung der Endbereiche weisen die beiden Endbereiche zusammen eine werkzeuglos und manuell betätigbare Spanneinrichtung auf, welche es einem Bediener bzw. Monteur gestattet, das Modulsystem bzw. das manschettenartige Element auf eine einfache Weise und mit einem geringen Zeitaufwand an der Rohreinheit anzuordnen.

Erfindungswesentlich ist nun, dass das radial abragende Organ lösbar mit dem manschettenartigen Element verbindbar ist. Bedingt dadurch kann das manschettenartige Element getrennt von dem radial abragenden Organ hergestellt werden, sodass ein Fertigungsaufwand und folglich auch Herstellungskosten des Modulsystems beträchtlich reduziert werden können. Zudem gestattet die lösbare Verbindung beispielsweise im Fall eines Defekts des manschettenartigen Elements bzw. des radial abragenden Organs einen einfachen Austausch des manschettenartigen Elements bzw. radial abragenden Organs. Auch ist es dadurch möglich, Organe unterschiedlichster Formen mit dem manschettenartigen Element zu verbinden und das Modulsystem somit individuell an eine Geometrie eines Schachtes anzupassen. Vorteilhaft kann das Modulsystem in Gestalt eines Modulbaukastens ausgebildet bzw. vertrieben werden, wobei der Modulbaukasten eine Vielzahl von radial abragenden Organen unterschiedlichster Formen umfasst. Ein Monteur bzw. Bediener kann dann entsprechend einer Geometrie bzw. eines Querschnitts, entlang einer Querachse eines Schachts betrachtet, des Schachts eine Auswahl an einem oder mehreren radial abragenden Organen treffen und mit dem manschettenartigen Element verbinden, um das Modulsystem an ein individuelles Bedürfnis anzupassen. Wesentlich für die Erfindung ist außerdem, dass das manschettenartige Element auf einer bei Anordnung an der Rohreinheit von der Rohreinheit abgewandten Seite des manschettenartigen Elements eine in einer Richtung eines Umfangs des manschettenartigen Elements verlaufende und sich vorzugsweise nahezu über den gesamten Umfang erstreckende Linearführung aufweist, längs derer das radial abragende Organ bewegbar ist. Demnach kann das Modulsystem noch besser und auf eine einfache Weise an eine Geometrie eines Schachtes angepasst werden. Dabei kann vorgesehen sein, dass das radial abragende Organ lösbar mit der Linearführung verbunden werden kann, wobei die Linearführung derart ausgeführt sein kann, dass eine Vielzahl von radial abragenden Organen an der Linearführung befestigt bzw. mit dieser verbunden werden können. Vorzugsweise erstreckt sich die Linearführung nahezu über den gesamten Umfang des manschettenartigen Elements. In diesem Fall kann das radial abragende Organ nahezu in jedem beliebigen Azimutwinkel bezogen auf einen der Endbereiche angeordnet bzw. ausgerichtet werden. Das Merkmal "nahezu über den gesamten Umfang" ist insbesondere dahingehend auszulegen, dass die Linearführung sich nicht in die Endbereiche hinein erstreckt. Dies ist zum einen der Tatsache geschuldet, dass die Endbereiche zusammen die Spanneinrichtung aufweisen. Zum anderen sind die Endbereiche bei einer derartigen Ausgestaltung für einen Monteur bzw. Bediener besser zugänglich, sodass dieser die Endbereiche besser greifen und in einer gewünschten Art und Weise verbinden bzw. zusammenführen kann. Insgesamt wird somit ein Modulsystem bereitgestellt, welches kostengünstig hergestellt und flexibel eingesetzt werden kann.

In einer vorteilhaften Variante der Erfindung kann das radial abragende Organ formschlüssig und/oder kraftschlüssig mit dem manschettenartigen Element verbindbar sein. Das radial abragende Organ kann dann einen einer Form der Linearführung entsprechend geformten Abschnitt aufweisen. Wenn das radial abragende Organ ausschließlich formschlüssig mit dem manschettenartigen Element verbindbar ist, kann auf eine Verwendung von zusätzlichen Mitteln zur Montage, wie beispielsweise Schrauben, vollständig verzichtet werden. Auch kann die Montage in diesem Fall mit einem verhältnismäßig geringen Zeitaufwand erfolgen. Gleichwohl kann eine kraftschlüssige Verbindbarkeit, insbesondere mittels Schrauben, vorgesehen sein. Weiter ist es denkbar, dass die Linearführung als eine Nut ausgebildet ist, wobei das radial abragende Organ mithilfe eines Nutensteins an der Nut befestigt werden kann.

Gemäß einer konstruktiv vorteilhaften Ausgestaltung der Erfindung kann die Linearführung als T-Führung oder Schwalbenschwanzführung ausgebildet sein. Dadurch ist es möglich, das Organ auf eine einfache Weise besonders sicher an der Linearführung bzw. dem manschettenartigen Element zu befestigen.

In einer besonderen Weiterbildung der Erfindung kann das Modulsystem mehrere, vorzugsweise vier, in gleichmäßigen Winkelabständen zueinander angeordnete, radial abragende Organe umfassen, wobei die Organe bezogen auf die Längsachse radial elastisch verformbar ausgebildet sind. Dadurch ist nicht nur eine zentrische Anordnung der Rohreinheit innerhalb eines Schachtes möglich, sondern das Modulsystem passt sich ohne weitere Maßnahmen automatisch unterschiedlichen Öffnungsweiten bzw. Querschnitten des Schachtes an.

Gemäß einer zweckmäßigen konstruktiven Ausgestaltung der Erfindung können die abragenden Organe als Haltearme mit an den Haltearmen angeordneten Klemmscheiben und/oder Klemmkugeln ausgebildet sein. Dabei können die Haltearme starr oder elastisch ausgebildet sein. Auch können die Haltearme teleskopartig, d.h. auseinanderschiebbar bzw. längenverstellbar, ausgebildet sein, sodass eine Länge der Haltearme auf eine einfache Weise an einen Querschnitt eines Schachtes angepasst werden kann. Vorteilhafterweise können die Klemmscheiben bzw. Klemmkugeln elastisch ausgeführt sein. Zweckmäßig ist außerdem, wenn die Klemmscheiben derart an den Haltearmen angeordnet sind, dass eine Längsachse bzw. Rotationsachse der Klemmscheiben senkrecht zu der Längsachse des manschettenartigen Elements ausgerichtet ist. Selbstverständlich ist die Erfindung nicht auf scheibenförmige bzw. kugelförmige Klemmkörper begrenzt, sondern die Klemmkörper können prinzipiell jede beliebige geometrische Form aufweisen. Insbesondere sind auch Klemmwürfel oder Klemmhalbkugeln denkbar. Das Modulsystem kann dann derart in einem Schacht angeordnet werden, dass die Klemmscheiben bzw. Klemmkugeln an einer Innenwand des Schachtes zur Anlage kommen, sodass die Rohreinheit beabstandet von der Innenwand in dem Schacht geführt bzw. fixiert wird.

In einer besonderen Weiterbildung der Erfindung können die Klemmscheiben bzw. die Klemmkugeln lösbar mit den Haltearmen verbindbar sein. Demnach können die Klemmscheiben bzw. Klemmkugeln Bestandteil eines Modulbaukastens sein, sodass das Modulsystem noch besser an eine Geometrie eines Schachtes angeglichen werden kann. Auch können die Klemmkörper in diesem Fall separat ausgewechselt werden.

In einer Ausführungsform der Erfindung können die Haltearme alle gleich lang sein. Somit kann die Rohreinheit zentrisch in einem Schacht angeordnet werden. Vorzugsweise können die Haltearme eine Länge von 30 mm, 100 mm oder 160 mm aufweisen. Gleichwohl kann vorgesehen sein, dass die Haltearme eine unterschiedliche Länge aufweisen.

Alternativ können die abragenden Organe als Klemmringe ausgebildet sein, wobei Längsachsen der Klemmringe senkrecht zu der Längsachse des manschettenartigen Elements verlaufen. Die Klemmringe können bezogen auf einen an der Linearführung befindlichen Befestigungspunkt verdrehbar und/oder verkippbar ausgebildet sein. Auch kann ein Durchmesser des Klemmrings beispielsweise über eine selbstarretierende Ratsche frei einstellbar sein. Vorteilhafterweise können die Klemmringe unmittelbar mit dem manschettenartigen Element verbunden werden.

In einem Ausführungsbeispiel der Erfindung kann die Spanneinrichtung als eine selbstarretierende Ratsche ausgebildet sein. In diesem Fall ist die Spanneinrichtung auf eine einfache Weise und mit einem geringen Kraftaufwand betätigbar, sodass das Modulsystem mit einem geringen Zeitaufwand montiert werden kann. Alternativ kann als Spanneinrichtung eine Klemmschnallenverbindung vorgesehen sein.

Der erste Endbereich kann eine Rastnase und der zweite Endbereich eine zahnartige Kontur aufweisen, wobei die Rastnase und die Kontur zusammen die selbstarretierende Ratsche ausbilden, wobei die Rastnase zur Herstellung der Verriegelungsstellung mit der Kontur in Eingriff gebracht werden kann. Anstelle einer Rastnase kann auch ein Rasthaken vorgesehen sein.

In einer besonderen Weiterbildung der Erfindung kann das manschettenartige Element eine radial umlaufende Wand aufweisen, wobei von der Wand wenigstens ein radial nach innen ragender Halteabschnitt ausgeht, der in der Verriegelungsstellung der Spanneinrichtung mit der Rohreinheit eine formschlüssige und/oder kraftschlüssige, die Rohreinheit in einer axialen Richtung fixierende Verbindung ausbildet. Der Halteabschnitt kann in Gestalt eines Vorsprungs ausgebildet sein, der in eine Vertiefung oder Rille eines Rohrelements eingreifen kann, wodurch das manschettenartige Element in der axialen Richtung an der Rohreinheit gesichert werden kann. Auch kann ein Rohrelement ein wellenförmiges Profil bzw. eine wellenförmige Kontur aufweisen mit dem bzw. der der Halteabschnitt in Eingriff gebracht werden kann. Besonders bevorzugt weist die Wand mehrere in gleichmäßigen Winkelabständen zueinander angeordnete kreisbogenartige Halteabschnitte auf.

Darüber hinaus kann das Modulsystem ferner ein benachbart des manschettenartigen Elements bzw. zumindest teilweise unter dem manschettenartigen Element anordbares Sicherungselement umfassen, an welchem sich der Halteabschnitt abstützen kann bzw. an welchem der Halteabschnitt anlegbar ist. Gerade bei im Wesentlichen glatten Rohren kann durch eine Verwendung des Sicherungselements eine zwischen dem manschettenartigen Element und der Rohreinheit ausgebildete Haftreibung vorteilhaft erhöht werden. Wenn sich das manschettenartige Element mit dem Halteabschnitt seitlich an dem Sicherungselement abstützt, kann eine axiale Kraft in einer Richtung eines Vorsprungs des Sicherungselements aufgenommen werden, wodurch das Modulsystem zusätzlich in der axialen Richtung an der Rohreinheit gesichert wird.

Dabei kann als Sicherungselement ein Klebebandstreifen und/oder ein vorzugsweise kreisringförmiger Elastomer vorgesehen sein. Der kreisringförmige Elastomer kann beispielsweise mit der Rohreinheit verklebt werden und/oder an einer mit der Rohreinheit in eine Wirkverbindung tretenden Fläche aufgeraut sein.

Besonders einfach und kostengünstig kann das Modulsystem hergestellt werden, wenn dieses vollständig aus einem Kunststoff hergestellt wird. Dabei kann insbesondere ein Spritzgussverfahren zur Anwendung kommen.

Die erfindungsgemäße Rohreinheit, insbesondere eine zumindest zwei miteinander koaxial verbundene Rohrelemente umfassende Rohreinheit, weist ein erfindungsgemäßes Modulsystem auf. Zu den vorteilhaften Wirkungen der erfindungsgemäßen Rohreinheit wird auf die Vorteilsbeschreibung des erfindungsgemäßen Modulsystems verwiesen.

Weitere vorteilhafte Ausführungsformen der Rohreinheit ergeben sich aus den Merkmalsbeschreibungen der auf den Vorrichtungsanspruch 1 rückbezogenen Unteransprüche.

Bei dem erfindungsgemäßen Verfahren zum Anordnen einer Rohreinheit, insbesondere einer aus zumindest zwei miteinander koaxial verbundenen Rohrelementen bestehenden Rohreinheit, innerhalb eines Schachtes mit einem Modulsystem, wird ein manschettenartiges Element des Modulsystems an der Rohreinheit angeordnet, wobei zumindest ein bezogen auf eine Längsachse des manschettenartigen Elements von dem manschettenartigen Element radial abragendes Organ des Modulsystems an dem manschettenartigen Element angeordnet wird, wobei umfangseitige Endbereiche des manschettenartigen Elements zur Herstellung einer Verriegelungsstellung des manschettenartigen Elements in Wirkverbindung miteinander verbunden werden, wobei von dem manschettenartigen Element in der Verriegelungsstellung der Endbereiche ein Kraft- oder Formschluss mit der Rohreinheit ausgebildet wird, wobei die Verriegelungsstellung mittels einer werkzeuglos und manuell betätigbaren Spanneinrichtung der Endbereiche hergestellt wird, wobei das radial abragende Organ lösbar mit dem manschettenartigen Element verbunden wird, wobei das radial abragende Organ längs einer auf einer bei Anordnung an der Rohreinheit von der Rohreinheit abgewandten Seite des manschettenartigen Elements befindlichen in einer Richtung eines Umfangs des manschettenartigen Elements verlaufenden und sich vorzugsweise nahezu über den gesamten Umfang erstreckenden Linearführung bewegt und einer Geometrie des Schachtes entsprechend positioniert wird. Zu den vorteilhaften Wirkungen des erfindungsgemäßen Verfahrens wird auf die Vorteilsbeschreibung des erfindungsgemäßen Modulsystems verwiesen.

Vorteilhafterweise kann das radial abragende Organ an eine Innenwand des Schachtes derart angelegt werden, dass die Rohreinheit in dem Schacht fixiert und von der Innenwand beabstandet innerhalb des Schachtes geführt wird. Dadurch kann eine optimale Kühlung der Rohreinheit erzielt werden, weil so die Rohreinheit über einen gesamten Umfang der Rohreinheit in Kontakt mit einer Umgebungsluft stehen kann.

Zweckmäßig kann außerdem sein, wenn eine Ausführungsform des radial abragenden Organs entsprechend der Geometrie gewählt wird. Nach einer in Augenscheinnahme der Geometrie des Schachtes durch einen Monteur bzw. Bediener kann dieser dann entscheiden, ob als radial abragendes Organ ein Haltearme mit einem daran angeordneten Klemmkörper oder ein Klemmring vorzusehen ist. Auch kann eine Auswahl hinsichtlich einer Länge des Haltearms bzw. eines Durchmessers des Klemmrings der Geometrie entsprechend getroffen werden.

In einer besonderen Weiterbildung der Erfindung kann wenigstens ein von einer das manschettenartige Element radial umlaufenden Wand des manschettenartigen Elements radial nach innen ragender Halteabschnitt in der Verriegelungsstellung der Spanneinrichtung derart mit der Rohreinheit formschlüssig und/oder kraftschlüssig verbunden werden, dass das manschettenartige Element in einer axialen Richtung an der Rohreinheit gesichert wird. Dabei kann das manschettenartige Element derart an der Rohreinheit angeordnet werden, dass der Halteabschnitt in eine Vertiefung bzw. Rille oder eine sonstige wellenförmige Kontur der Rohreinheit eingreifen kann.

Folglich kann das manschettenartige Element derart an der Rohreinheit angeordnet werden, dass der Halteabschnitt in eine Kontur der Rohreinheit eingreift. Das manschettenartige Element kann somit noch sicherer an der Rohreinheit angeordnet werden.

In einer vorteilhaften Variante der Erfindung kann in zumindest einem Bereich, in welchem das manschettenartige Element nicht unmittelbar an einem im Wesentlichen glatten Rohrelement der Rohreinheit anliegt, derart eine Spannkraft auf das manschettenartige Element erzeugt werden, dass durch die Spannkraft eine radial nach innen wirkende Anpresskraft auf den Halteabschnitt ausgeübt wird. In besonders überraschender Weise ist somit eine axiale Sicherung bzw. Fixierung des Modulsystems an Rohrelementen mit einer glatten Rohroberfläche möglich. Die Spannkraft kann durch die Herstellung der Verriegelungsstellung erzeugt werden.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend werden besondere Ausführungsformen der Erfindung unter Bezugnahme auf die beigefügten Zeichnungen näher erläutert.

Es zeigen:
- Fig. 1: eine Aufsicht eines Modulsystems in einer Ausführungsform;
- Fig. 2: eine perspektivische Darstellung des in der Fig. 1 gezeigten Modulsystems;
- Fig. 3: eine Seitenansicht des in der Fig. 1 gezeigten Modulsystems;
- Fig. 4: eine Teilschnittansicht des in der Fig. 1 gezeigten Modulsystems entlang einer Achse A-A;
- Fig. 5: eine perspektivische Ansicht eines Modulsystems in einer weiteren Ausführungsform;
- Fig. 6: eine Aufsicht des in der Fig. 5 gezeigten Modulsystems;
- Fig. 7: eine vergrößerte Ansicht eines in der Fig. 6 gezeigten Bereichs Z;
- Fig. 8: eine Seitenansicht des in der Fig. 5 gezeigten Modulsystems;
- Fig. 9: eine Teilschnittansicht des in der Fig. 6 gezeigten Modulsystems entlang einer Achse A-A;
- Fig. 10: eine perspektivische Ansicht eines Modulsystems in einer weiteren Ausführungsform;
- Fig. 11: eine Seitenansicht des in der Fig. 10 gezeigten Modulsystems;
- Fig. 12: eine Aufsicht des in der Fig. 10 gezeigten Modulsystems;
- Fig. 13: eine vergrößerte Ansicht eines in der Fig. 12 gezeigten Bereichs Z;
- Fig. 14: eine Teilschnittansicht des in der Fig. 12 gezeigten Modulsystems entlang einer Achse A-A;
- Fig. 15: eine perspektivische Ansicht eines Modulsystems in einer weiteren Ausführungsform;
- Fig. 16: eine Seitenansicht des in der Fig. 15 gezeigten Modulsystems;
- Fig. 17: eine Aufsicht des in der Fig. 15 gezeigten Modulsystems;
- Fig. 18: eine Teilschnittansicht des in der Fig. 17 gezeigten Modulsystems entlang einer Achse A-A;
- Fig. 19: eine perspektivische Ansicht eines Modulsystems in einer weiteren Ausführungsform;
- Fig. 20: eine Vorderansicht des in der Fig. 19 gezeigten Modulsystems;
- Fig. 21: eine Aufsicht des in der Fig. 19 gezeigten Modulsystems;
- Fig. 22: eine Teilschnittansicht des in der Fig. 21 gezeigten Modulsystems entlang einer Achse A-A;
- Fig. 23: eine perspektivische Ansicht eines in der Fig. 2 gezeigten manschettenartigen Elements;
- Fig. 24: eine Seitenansicht des in der Fig. 23 gezeigten manschettenartigen Elements;
- Fig. 25: eine Aufsicht des in der Fig. 23 gezeigten manschettenartigen Elements;
- Fig. 26: eine Teilschnittansicht des in der Fig. 25 gezeigten manschettenartigen Elements entlang einer Achse A-A;
- Fig. 27: eine vergrößerte Ansicht eines in der Fig. 25 gezeigten Bereichs Y;
- Fig. 28: eine vergrößerte Ansicht eines in der Fig. 25 gezeigten Bereichs Z;
- Fig. 29: eine perspektivische Ansicht eines bzw. einer in der Fig. 2 gezeigten Haltearms bzw. Klemmkugel;
- Fig. 30: eine Seitenansicht des bzw. der in der Fig. 29 gezeigten Haltearms bzw. Klemmkugel;
- Fig. 31: eine vergrößerte Ansicht eines in der Fig. 30 gezeigten Bereichs Z;
- Fig. 32: eine Aufsicht des bzw. der in der Fig. 29 gezeigten Haltearms bzw. Klemmkugel;
- Fig. 33: eine Untersicht des bzw. der in der Fig. 29 gezeigten Haltearms bzw. Klemmkugel.

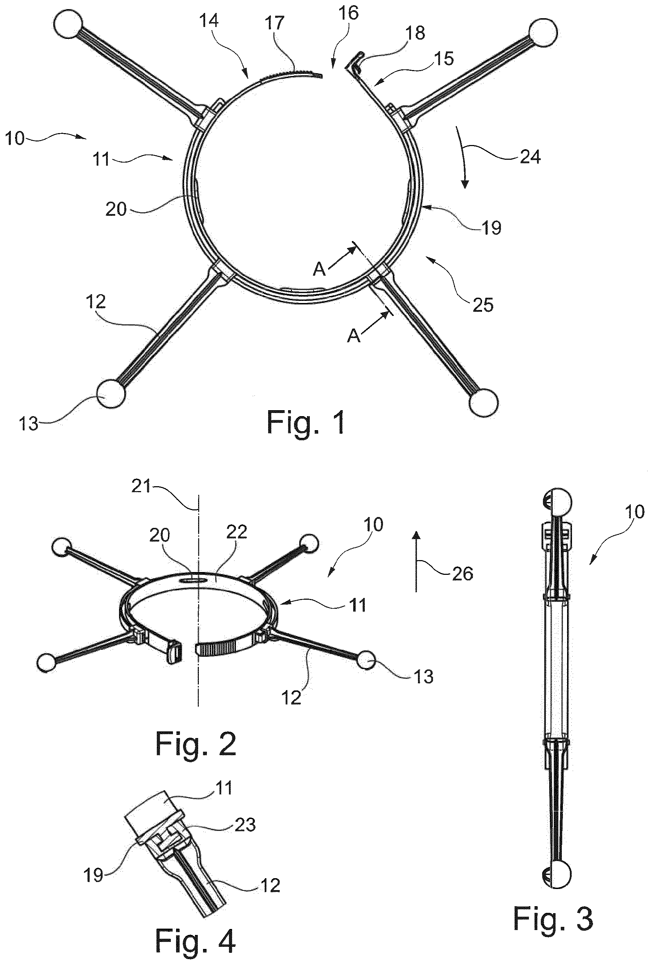

Eine Zusammenschau der Fig. 1 bis 4 zeigt ein Modulsystem 10 zum Anordnen einer hier nicht dargestellten Rohreinheit, wobei das Modulsystem 10 ein an der Rohreinheit anordbares manschettenartiges Element 11 und vier in gleichmäßigen Winkelabständen zueinander angeordnete, bezogen auf eine Längsachse 21 des manschettenartigen Elements 11 von dem manschettenartigen Element 11 radial abragende Haltearme 12 mit an den Haltearmen 12 angeordneten Klemmkugel 13 umfasst. Dabei sind die Haltearme 12 bezogen auf die Längsachse 21 radial elastisch verformbar ausgebildet und zur Anlage an einer hier nicht gezeigten Innenwand eines hier gleichfalls nicht gezeigten Schachtes vorgesehen, sodass die Rohreinheit innerhalb des Schachtes von der Innenwand beabstandet fixiert und geführt werden kann. Weiter weist das manschettenartige Element 11 zwei in einer Verriegelungsstellung des manschettenartigen Elements 11 in Wirkverbindung miteinander verbundene Endbereiche 14 und 15 auf, wobei das manschettenartige Element 11 in der Verriegelungsstellung der Endbereiche 14 und 15 einen Kraft- oder Formschluss mit der Rohreinheit ausbildet, wobei die beiden Endbereiche 14 und 15 zusammen eine selbstarretierende Ratsche 16 zum Herstellen der Verriegelungsstellung aufweisen. Dabei weist der erste Endbereich 15 eine Rastnase 18 und der zweite Endbereich 14 eine zahnartige Kontur 17 auf, wobei die Rastnase 18 und die zahnartige Kontur 17 zusammen die selbstarretierende Ratsche 16 ausbilden, wobei die Rastnase 18 zur Herstellung der Verriegelungsstellung mit der zahnartigen Kontur 17 in Eingriff gebracht werden kann. Dadurch, dass die selbstarretierende Ratsche 16 werkzeuglos und manuell betätigt werden kann, kann das Modulsystem 10 auf eine einfache Weise und mit einem verhältnismäßig geringen Zeitaufwand von einem Monteur bzw. Bediener an der Rohreinheit angeordnet werden.

Erfindungsgemäß weist das manschettenartige Element 11 auf einer bei Anordnung an der Rohreinheit von der Rohreinheit abgewandten Seite 25 des manschettenartigen Elements 11, d.h. radial außen, eine in einer Richtung 24 eines Umfangs des manschettenartigen Elements 11 verlaufende und sich nahezu über den gesamten Umfang erstreckende Linearführung 19 auf, mit welcher die Haltearme 12 lösbar verbunden sind und längs derer die Haltearme 12 bewegbar sind. Die Linearführung 19 ist hier als eine T-Führung ausgebildet, wobei die Haltearme 12 über einen entsprechend der T-Führung geformten Abschnitt 23 mit der Linearführung 19 formschlüssig verbunden sind. Ferner weist das manschettenartige Element eine radial umlaufende Wand 22 auf, wobei von der Wand 22 drei über den Umfang des manschettenartigen Elements 11 verteilte radial nach innen ragende Halteabschnitte 20 ausgehen, welche in der Verriegelungsstellung der selbstarretierenden Ratsche 16 mit der Rohreinheit eine formschlüssige und/oder kraftschlüssige, die Rohreinheit bzw. das manschettenartige Element 11 in einer axialen Richtung 26 fixierende Verbindung ausbilden.

Bei der Beschreibung der nachfolgenden Ausführungsformen wird im Wesentlichen auf die Unterschiede zu der in den Fig. 1 bis 4 gezeigten Ausführungsform eingegangen.

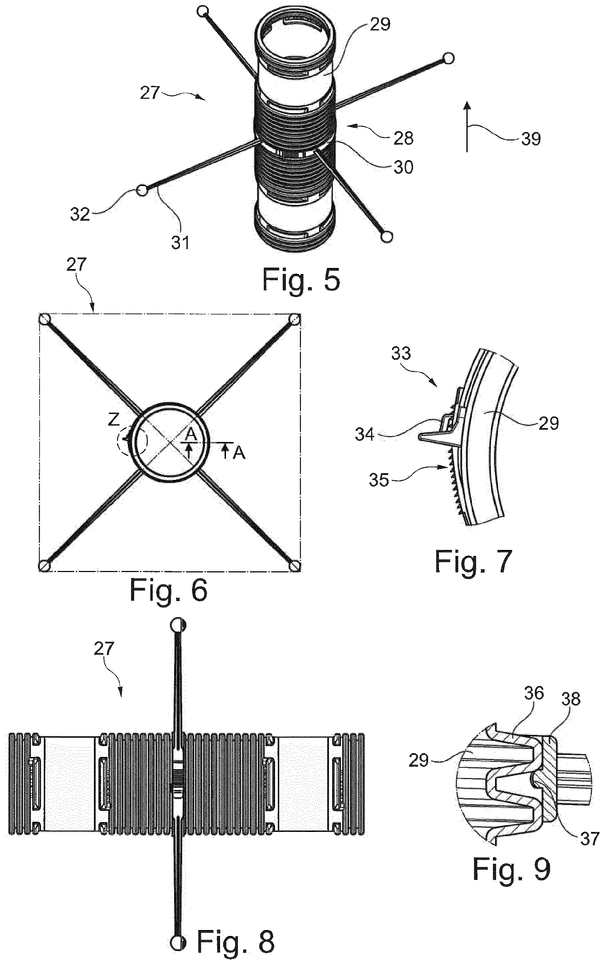

Eine Zusammenschau der Fig. 5 bis 9 verdeutlicht ein Modulsystem 27 in einer weiteren Ausführungsform, welches ein an einem Rohrelement 29 einer Rohreinheit 28 angeordnetes manschettenartiges Element 30 sowie an dem manschettenartigen Element 30 mit vier in gleichmäßigen Winkelabständen zueinander angeordneten Haltearmen 31 mit Klemmkugeln 32 umfasst. Das manschettenartige Element 30 weist eine selbstarretierende Ratsche 33 auf, welche durch eine Rastnase 34 und eine zahnartige Kontur 35 ausgebildet ist. Das Rohrelement 29 weist hier ein wellenförmiges Profil 36 auf, in welches ein Halteabschnitt 37 einer radial umlaufenden Wand 38 des manschettenartigen Elements 30 eingreift, sodass das manschettenartige Element 30 bzw. das Modulsystem 27 in einer axialen Richtung 39 an dem Rohrelement 29 gesichert ist.

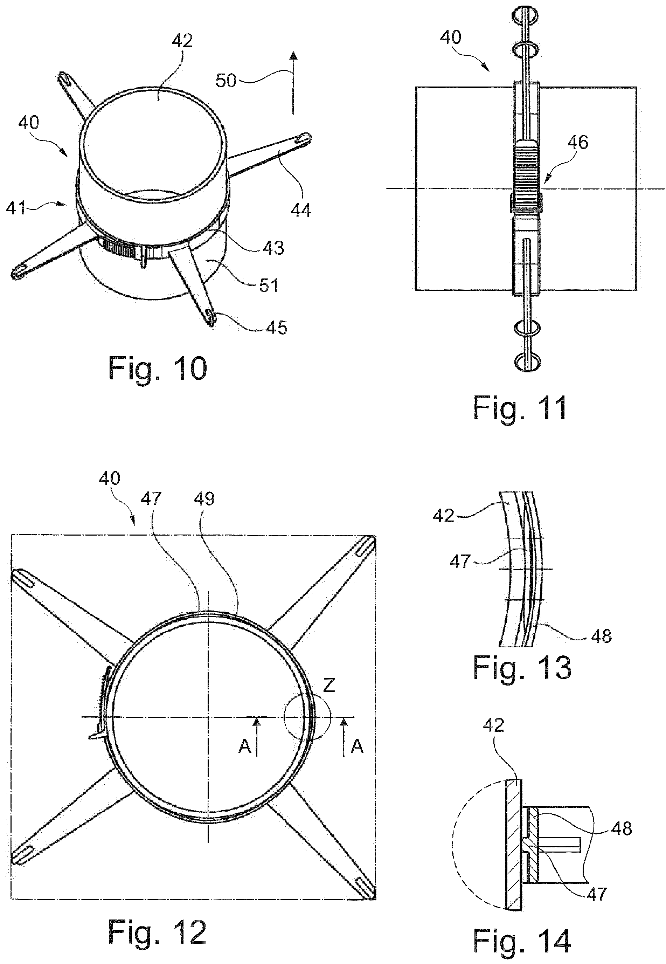

Aus den Fig. 10 bis 14 ist ein Modulsystem 40 in einer weiteren Ausführungsform ersichtlich, welches ein an einem Rohrelement 42 einer Rohreinheit 41 angeordnetes manschettenartiges Element 43 sowie vier in gleichmäßigen Winkelabständen zueinander an dem manschettenartigen Element 43 angeordnete Haltearme 44 mit Klemmscheiben 45 umfasst, wobei das manschettenartige Element 43 eine selbstarretierende Ratsche 46 aufweist. Ferner weist das manschettenartige Element 43 eine radial umlaufende Wand 48 auf, von welcher drei radial nach innen ragende Halteabschnitte 47 ausgehen, welche in einer Verriegelungsstellung der selbstarretierenden Ratsche 46 mit der Rohreinheit 41 bzw. dem Rohrelement 42 eine formschlüssige und/oder kraftschlüssige, die Rohreinheit 41 bzw. das manschettenartige Element 43 in einer axialen Richtung 50 fixierende Verbindung ausbildet. Das Rohrelement 42 ist hier mit einer im Wesentlichen glatten Oberfläche 51 des Rohrelements 42 ausgebildet. In der Verriegelungsstellung wird in Bereichen 49, in welchen das manschettenartige Element 43 nicht unmittelbar an der im Wesentlichen glatten Oberfläche 51 anliegt, derart eine Spannkraft auf das manschettenartige Element 43 erzeugt, dass durch die Spannkraft eine radial nach innen wirkende Anpresskraft auf die Halteabschnitte 47 ausgeübt wird. Dadurch ist trotz der glatten Oberfläche 51 eine Sicherung in der axialen Richtung 50 möglich.

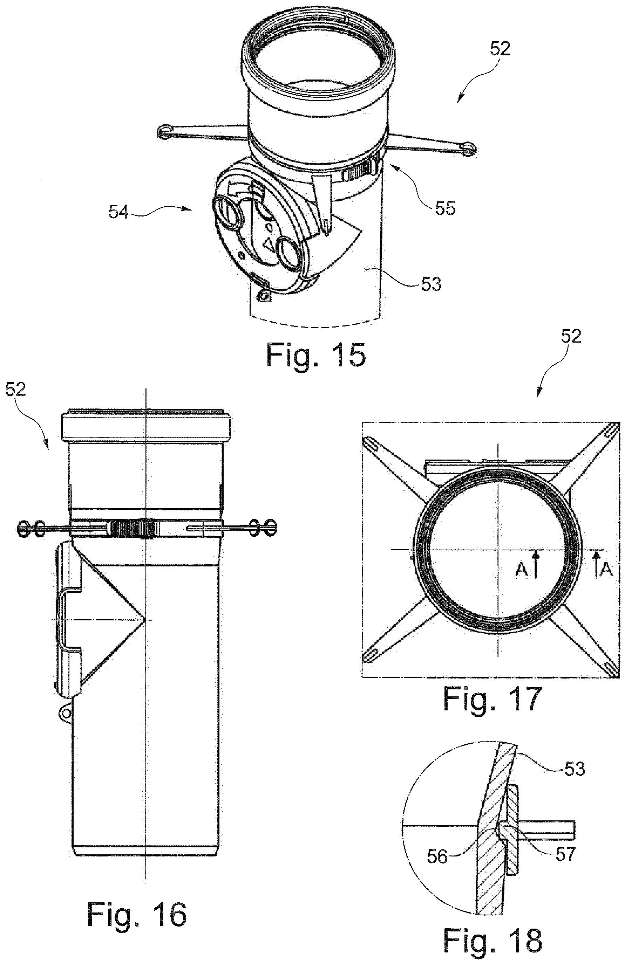

Die Fig. 15 bis 18 zeigen ein weiteres Modulsystem 52 mit einem manschettenartigen Element 55, wobei das Modulsystem 52 an einem Rohrelement 53, welches eine Muffe 54 aufweist, angeordnet ist. Dabei weist das Rohrelement 53 oberhalb der Muffe 54 eine das Rohrelement 53 umfangseitig umfassende Einschnürung 56 auf, in welcher ein Halteabschnitt 57 derart eingreifen kann, dass das manschettenartige Element 55 axial an dem Rohrelement 53 gesichert ist.

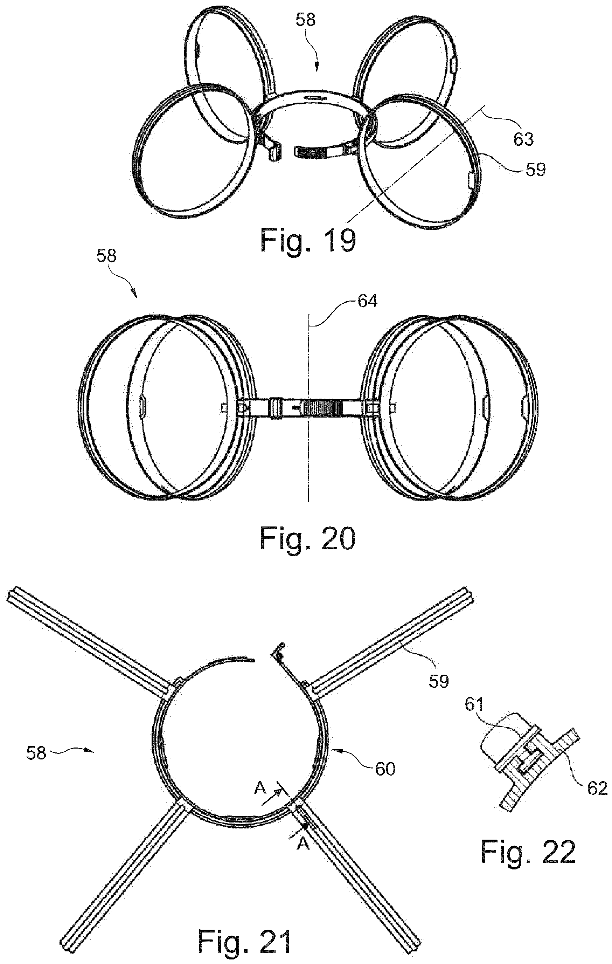

Den Fig. 19 bis 22 kann ein Modulsystem 58 entnommen werden, wobei das Modulsystem 58 ein manschettenartiges Element 60 und an dem manschettenartigen Element 60 angeordnete Klemmringe 59 umfasst. Dabei sind Längsachsen 63 der Klemmringe 59 senkrecht zu einer Längsachse 64 des manschettenartigen Elements 60 ausgerichtet. Weiter weist das manschettenartige Element 60 eine Linearführung 61 auf, an welcher die Klemmringe 59 über einen entsprechend der Linearführung 61 geformten Abschnitt 62 der Klemmringe 59 formschlüssig befestigt sind.

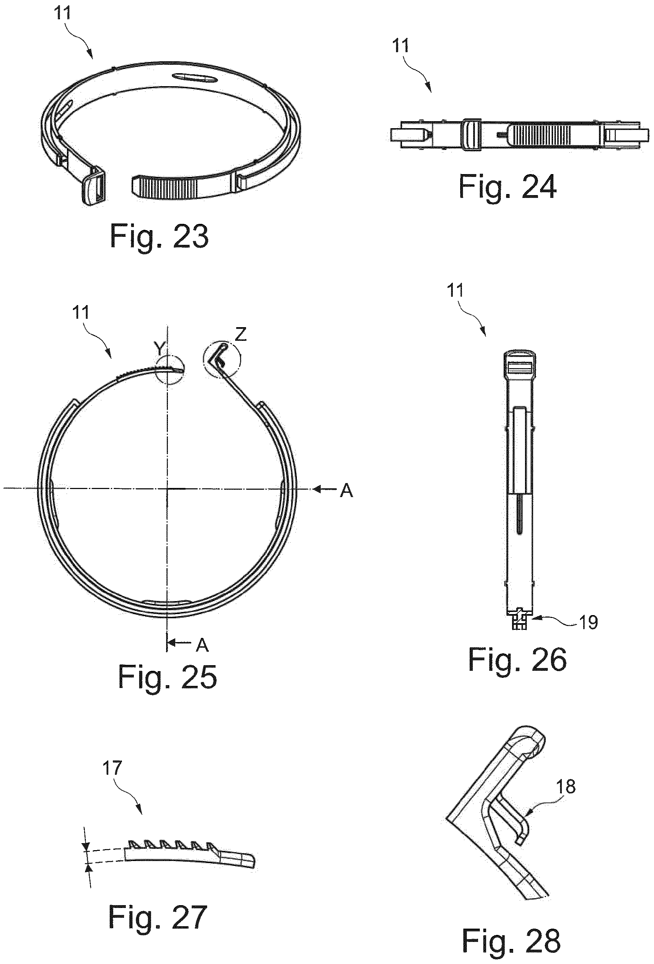

Eine Zusammenschau der Fig. 23 bis 28 verdeutlicht das in der Fig. 2 gezeigte manschettenartige Element 11 noch einmal im Detail. Insbesondere ist in der Fig. 27 bzw. 28 die zahnartige Kontur 17 bzw. die Rastnase 18 gut zu erkennen.

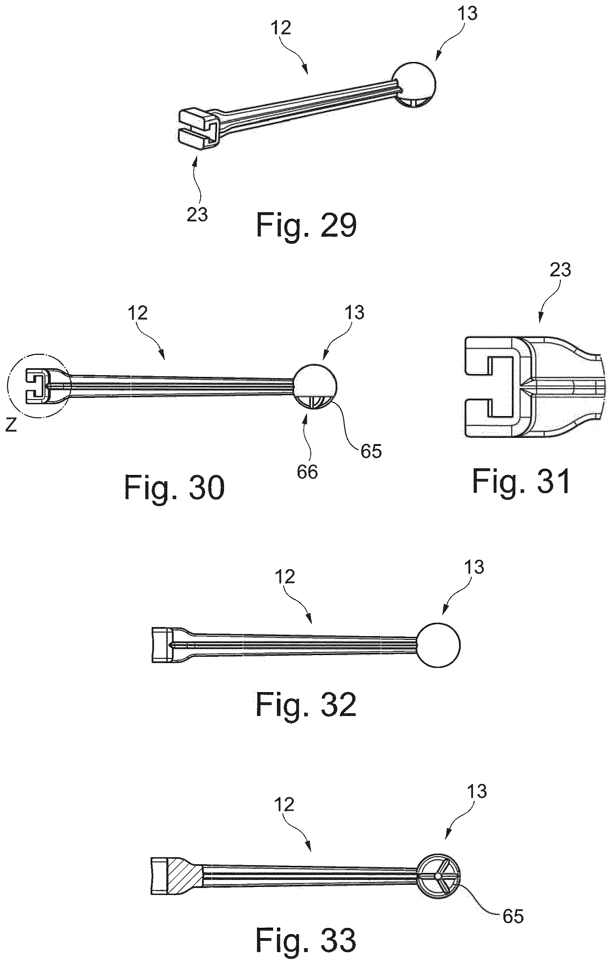

Eine Zusammenschau der Fig. 29 bis 33 zeigt die in der Fig. 2 dargestellten Haltearme 12 bzw. Klemmkugeln 13 noch einmal im Detail. Die Klemmkugeln 13 sind an einer Unterseite 66 der Klemmkugeln 13 offen ausgebildet, wobei die Unterseite 66 Stege 65 aufweist.

Das manschettenartige Element 11, die Haltearme 12 und die Klemmkugeln 13, sind bevorzugt vollständig aus einem Kunststoff, vorzugsweise Polypropylen (PP), ausgebildet. Somit kann das gesamte Modulsystem 10 aus Polypropylen (PP) ausgebildet sein. Auch die anderen Ausführungsformen von Modulsystemen können zumindest teilweise, bevorzugt vollständig, aus Polypropylen (PP) ausgebildet werden.

Die Beschreibung, die Zeichnungen und die Ansprüche enthalten vielfach Kombinationen von Merkmalen. Jedoch ist die Erfindung nicht allein auf diese Kombinationen beschränkt. Selbstverständlich lassen sich die Merkmale zweckmäßigerweise auch einzeln betrachten und/oder zu beliebigen sinnvollen weiteren Kombinationen zusammenfügen, wobei diese weiteren Kombinationen hiermit als offenbart gelten sollen. Insbesondere ist dies wie folgt zu verstehen: Umfasst ein auf einen unabhängigen bzw. nebengeordneten Anspruch, welcher eine Gesamtheit von Merkmalen A umfasst, rückbezogener Anspruch beispielsweise ein Merkmal B und ein Merkmal C, so soll zweckmäßigerweise auch die Kombination der Merkmale A mit dem Merkmal B, also ohne das Merkmal C, als offenbart gelten. Insbesondere soll auch eine Kombination von Merkmalen von verschiedenen in den Zeichnungen verdeutlichten Ausführungsformen als offenbart gelten.

### Bezugszeichenliste

- 10: Modulsystem
- 11: manschettenartiges Element
- 12: Haltearm
- 13: Klemmkugel
- 14: zweiter Endbereich
- 15: erster Endbereich
- 16: selbstarretierende Ratsche
- 17: zahnartige Kontur
- 18: Rastnase
- 19: Linearführung
- 20: Halteabschnitt
- 21: Längsachse
- 22: Wand
- 23: Abschnitt
- 24: Richtung
- 25: Seite
- 26: axiale Richtung
- 27: Modulsystem
- 28: Rohreinheit
- 29: Rohrelement
- 30: manschettenartiges Element
- 31: Haltearm
- 32: Klemmkugel
- 33: selbstarretierende Ratsche
- 34: Rastnase
- 35: zahnartige Kontur
- 36: wellenförmiges Profil
- 37: Halteabschnitt
- 38: Wand
- 39: axiale Richtung
- 40: Modulsystem
- 41: Rohreinheit
- 42: Rohrelement
- 43: manschettenartiges Element
- 44: Haltearm
- 45: Klemmscheibe
- 46: selbstarretierende Ratsche
- 47: Halteabschnitt
- 48: Wand
- 49: Bereich
- 50: axiale Richtung
- 51: Oberfläche
- 52: Modulsystem
- 53: Rohrelement
- 54: Muffe
- 55: manschettenartiges Element
- 56: Einschnürung
- 57: Halteabschnitt
- 58: Modulsystem
- 59: Klemmring
- 60: manschettenartiges Element
- 61: Linearführung
- 62: Abschnitt
- 63: Längsachse
- 64: Längsachse
- 65: Stege
- 66: Unterseite

## Patentansprüche

1. Modulsystem (10, 27, 40, 52, 58) zum Anordnen einer Rohreinheit (28, 41), insbesondere einer aus zumindest zwei miteinander koaxial verbundenen Rohrelementen (29, 42, 53) bestehenden Rohreinheit, wobei das Modulsystem ein an der Rohreinheit anordbares manschettenartiges Element (11, 30, 43, 55, 60) und zumindest ein an dem manschettenartigen Element angeordnetes, bezogen auf eine Längsachse (21, 63) des manschettenartigen Elements von dem manschettenartigen Element radial abragendes Organ (12, 13, 31, 32, 44, 45, 59) umfasst, wobei das manschettenartige Element umfangseitig zwei in einer Verriegelungsstellung des manschettenartigen Elements in Wirkverbindung miteinander verbundene Endbereiche (14, 15) aufweist, wobei das manschettenartige Element in der Verriegelungsstellung der Endbereiche einen Kraft- oder Formschluss mit der Rohreinheit ausbildet, wobei die beiden Endbereiche zusammen eine werkzeuglos und manuell betätigbare Spanneinrichtung (16, 33, 46) zum Herstellen der Verriegelungsstellung aufweisen,
**dadurch gekennzeichnet,**
**dass** das radial abragende Organ lösbar mit dem manschettenartigen Element verbindbar ist, wobei das manschettenartige Element auf einer bei Anordnung an der Rohreinheit von der Rohreinheit abgewandten Seite (25) des manschettenartigen Elements eine in einer Richtung (24) eines Umfangs des manschettenartigen Elements verlaufende und sich vorzugsweise nahezu über den gesamten Umfang erstreckende Linearführung (19, 61) aufweist, längs derer das radial abragende Organ bewegbar ist.

2. Modulsystem nach Anspruch 1,
**dadurch gekennzeichnet,**
**dass** das radial abragende Organ (12, 13, 31, 32, 44, 45, 59) formschlüssig und/oder kraftschlüssig mit dem manschettenartigen Element (11, 30, 43, 55, 60) verbindbar ist.

3. Modulsystem nach Anspruch 1 oder 2,
**dadurch gekennzeichnet,**
**dass** die Linearführung (19, 61) als T-Führung oder Schwalbenschwanzführung ausgebildet ist.

4. Modulsystem nach einem der vorangehenden Ansprüche,
**dadurch gekennzeichnet,**
**dass** das Modulsystem (10, 27, 40, 52, 58) mehrere, vorzugsweise vier, in gleichmäßigen Winkelabständen zueinander angeordnete, radial abragende Organe (12, 13, 31, 32, 44, 45, 59) umfasst, wobei die Organe bezogen auf die Längsachse (21, 63) radial elastisch verformbar ausgebildet sind.

5. Modulsystem nach Anspruch 4,
**dadurch gekennzeichnet,**
**dass** die abragenden Organe als Haltearme (12, 31, 44) mit an den Haltearmen angeordneten Klemmscheiben (45) und/oder Klemmkugeln (13, 32) ausgebildet sind.

6. Modulsystem nach Anspruch 5,
**dadurch gekennzeichnet,**
**dass** die Klemmscheiben (45) bzw. die Klemmkugeln (13, 32) lösbar mit den Haltearmen (12, 31, 44) verbindbar sind.

7. Modulsystem nach Anspruch 5 oder 6,
**dadurch gekennzeichnet,**
**dass** die Haltearme (12, 31, 44) alle gleich lang sind.

8. Modulsystem nach Anspruch 4,
**dadurch gekennzeichnet,**
**dass** die abragenden Organe als Klemmringe (59) ausgebildet sind, wobei Längsachsen (63) der Klemmringe senkrecht zu der Längsachse (64) des manschettenartigen Elements (60) verlaufen.

9. Modulsystem nach einem der vorangehenden Ansprüche,
**dadurch gekennzeichnet,**
**dass** die Spanneinrichtung als eine selbstarretierende Ratsche (16, 33, 46) ausgebildet ist.

10. Modulsystem nach Anspruch 9,
**dadurch gekennzeichnet,**
**dass** der erste Endbereich (15) eine Rastnase (18) und der zweite Endbereich (14) eine zahnartige Kontur (17) aufweist, wobei die Rastnase und die Kontur zusammen die selbstarretierende Ratsche (16, 33, 46) ausbilden, wobei die Rastnase zur Herstellung der Verriegelungsstellung mit der Kontur in Eingriff gebracht werden kann.

11. Modulsystem nach einem der vorangehenden Ansprüche,
**dadurch gekennzeichnet,**
**dass** das manschettenartige Element (11, 30, 43, 55, 60) eine radial umlaufende Wand (22, 38, 48) aufweist, wobei von der Wand wenigstens ein radial nach innen ragender Halteabschnitt (20, 37, 47, 57) ausgeht, der in der Verriegelungsstellung der Spanneinrichtung (16, 33, 46) mit der Rohreinheit eine formschlüssige und/oder kraftschlüssige, die Rohreinheit in einer axialen Richtung (26, 39, 50) fixierende Verbindung ausbildet.

12. Modulsystem nach Anspruch 11,
**dadurch gekennzeichnet,**
**dass** das Modulsystem (10, 27, 40, 52, 58) ferner ein benachbart des manschettenartigen Elements (11, 30, 43, 55, 60) bzw. zumindest teilweise unter dem manschettenartigen Element anordbares Sicherungselement umfasst, an welchem sich der Halteabschnitt (20, 37, 47, 57) abstützen kann bzw. an welchem der Halteabschnitt anlegbar ist.

13. Modulsystem nach Anspruch 12,
**dadurch gekennzeichnet,**
**dass** als Sicherungselement ein Klebebandstreifen und/oder ein vorzugsweise kreisringförmiger Elastomer vorgesehen ist.

14. Rohreinheit (28, 41), insbesondere eine zumindest zwei miteinander koaxial verbundene Rohrelemente (29, 42, 53) umfassende Rohreinheit, mit einem Modulsystem (10, 27, 40, 52, 58) nach einem der vorangehenden Ansprüche.

15. Verfahren zum Anordnen einer Rohreinheit (28, 41), insbesondere einer aus zumindest zwei miteinander koaxial verbundenen Rohrelementen (29, 42, 53) bestehenden Rohreinheit, innerhalb eines Schachtes mit einem Modulsystem (10, 27, 40, 52, 58), wobei ein manschettenartiges Element (11, 30, 43, 55, 60) des Modulsystems an der Rohreinheit angeordnet wird, wobei zumindest ein bezogen auf eine Längsachse (21, 63) des manschettenartiges Elements von dem manschettenartigen Element radial abragendes Organ (12, 13, 31, 32, 44, 45, 59) des Modulsystems an dem manschettenartigen Element angeordnet wird, wobei umfangseitige Endbereiche (14, 15) des manschettenartigen Elements zur Herstellung einer Verriegelungsstellung des manschettenartigen Elements in Wirkverbindung miteinander verbunden werden, wobei von dem manschettenartigen Element in der Verriegelungsstellung der Endbereiche ein Kraft- oder Formschluss mit der Rohreinheit ausgebildet wird, wobei die Verriegelungsstellung mittels einer werkzeuglos und manuell betätigbaren Spanneinrichtung (16, 33, 46) der Endbereiche hergestellt wird,
**dadurch gekennzeichnet,**
**dass** das radial abragende Organ lösbar mit dem manschettenartigen Element verbunden wird, wobei das radial abragende Organ längs einer auf einer bei Anordnung an der Rohreinheit von der Rohreinheit abgewandten Seite (25) des manschettenartigen Elements befindlichen in einer Richtung (24) eines Umfangs des manschettenartigen Elements verlaufenden und sich vorzugsweise nahezu über den gesamten Umfang erstreckenden Linearführung (19, 61) bewegt und einer Geometrie des Schachtes entsprechend positioniert wird.

16. Verfahren nach Anspruch 15,
**dadurch gekennzeichnet,**
**dass** das radial abragende Organ (12, 13, 31, 32, 44, 45, 59) an eine Innenwand des Schachtes derart angelegt wird, dass die Rohreinheit (28, 41) in dem Schacht fixiert und von der Innenwand beabstandet innerhalb des Schachtes geführt wird.

17. Verfahren nach Anspruch 15 oder 16,
**dadurch gekennzeichnet,**
**dass** eine Ausführungsform des radial abragenden Organs (12, 13, 31, 32, 44, 45, 59) entsprechend der Geometrie gewählt wird.

18. Verfahren nach einem der Ansprüche 15 bis 17,
**dadurch gekennzeichnet,**
**dass** wenigstens ein von einer das manschettenartige Element (11, 30, 43, 55, 60) radial umlaufenden Wand (22, 38, 48) des manschettenartigen Elements radial nach innen ragender Halteabschnitt (20, 37, 47, 57) in der Verriegelungsstellung der Spanneinrichtung (16, 33, 46) derart mit der Rohreinheit (28, 41) formschlüssig und/oder kraftschlüssig verbunden wird, dass das manschettenartige Element in einer axialen Richtung (26, 39, 50) an der Rohreinheit gesichert wird.

19. Verfahren nach Anspruch 18,
**dadurch gekennzeichnet,**
**dass** das manschettenartige Element (11, 30, 43, 55, 60) derart an der Rohreinheit (28, 41) angeordnet wird, dass der Halteabschnitt (20, 37, 47, 57) in eine Kontur (36, 56) der Rohreinheit eingreift.

20. Verfahren nach Anspruch 18,
**dadurch gekennzeichnet,**
**dass** in zumindest einem Bereich (49), in welchem das manschettenartige Element (43) nicht unmittelbar an einem im Wesentlichen glatten Rohrelement (42) der Rohreinheit (41) anliegt, derart eine Spannkraft auf das manschettenartige Element erzeugt wird, dass durch die Spannkraft eine radial nach innen wirkende Anpresskraft auf den Halteabschnitt (47) ausgeübt wird.
